# EUROPEAN PATENT APPLICATION

(11) **EP 4 840 919 A1**
(43) Date of publication of application: **18.11.2026**
(21) Application number: 24917582.9
(22) Date of filing: 26.12.2024
(51) Int. Cl.: C09D 201/00, C09D 5/00, C09D 7/61

(54) **AQUEOUS ORGANIC ZINC-RICH COATING MATERIAL HAVING EXCELLENT ABILITY TO SUPPRESS GENERATION OF HYDROGEN GAS**

(30) Priority: 16.01.2024 JP 2024004726
(71) Applicant: Roval Corporation, Osaka-shi, Osaka, 541-0041 (JP)
(72) Inventor: NAKAYA, Yasuyuki, Osaka-shi, Osaka 541-0041 (JP); NAKAMURA, Kenichi, Osaka-shi, Osaka 541-0041 (JP); MATSUMOTO, Hirofumi, Osaka-shi, Osaka 541-0041 (JP)
(74) Representative: Global IP Europe Patentanwaltskanzlei
(86) International application number: PCT/JP2024/046184
(87) International publication number: WO 2025/154534

(57) **Abstract**

This is to provide a water-based zinc-rich paint that suppresses hydrogen gas generation while achieving low toxicity and high corrosion resistance. The paint comprising: zinc powder in an amount of 70 weight % or more and a vanadium compound in an amount of 0.02 weight % or more, of solids content of the water-based zinc-rich paint; and a binder resin in an amount of 20 weight % or more, of a part of the solids content as excluding the zinc powder and the vanadium compound.

## Description

### Technical Field

The present invention relates to a water-based organic zinc-rich paint with excellent hydrogen-gas generation inhibition. In particular, the present invention relates to a water-based paint that is applied to steel surfaces to provide corrosion protection (especially heavy-duty corrosion protection), and that contains zinc powder and a binder resin. More specifically, the present invention relates to a water-based zinc-rich paint that is able to achieve hydrogen-gas generation inhibition.

### Background Art

Zinc-rich paints are used as heavy-duty corrosion protection paints for protecting steel products, particularly for repairing and restoring corrosion-protective coatings after the installation of structural materials exposed to the outdoors (Non-Patent Document 1). With respect to the zinc-rich paints, it is mentioned as below, at the beginning of the main text (excluding the abstract) of Non-Patent Document 1.

Zinc-rich paint is "an undercoat paint containing a high-content of zinc powder (70 wt % to 90 wt % of the coating film). Zinc-rich paint is used as a shop primer for steel materials used in ships and bridges, and as an anticorrosive undercoat paint to protect large steel structures such as bridges and industrial plants from corrosion."

Zinc-rich paint contains zinc powder, a binder, and, if necessary, additives. In particular, water-based zinc-rich paints with low VOC (volatile organic compounds) content and capable of drying and curing at room temperature have been gaining popularity in recent years (Patent Documents 1-4). Patent Document 1 exemplifies a paint using: an aqueous urethane resin as a binder; and a small amount of finely powdered silica as well as a small amount of a thickener (such as "polyether polyol and nonionic surfactant") as additives.

Meanwhile, after the water-based zinc-rich paint is prepared, hydrogen gas may be generated by the reaction between water and zinc dust. Therefore, under coating conditions requiring a long drying time, such as high-humidity coating conditions, there are chances of causing defects coating-film after drying of the surface if hydrogen gas is generated within the coating film at locations where the coating is too thick, such as at joints or at stepped or uneven areas of steel materials (Patent Document 2). Therefore, Patent Document 2 below discloses in its examples, using the following as "adhesion promoters"---"free acids of alkyl phosphate ester compounds", "free acids of alkyl/aryl phosphate ester compounds", "alkylol ammonium salts of copolymers containing phosphate ester groups" and "sulfonic acid ester compounds."

By the technology of Patent Document 2 using the "adhesion promoter", the hydrogen-gas generation would not be adequately suppressed; thus, when exposed to high humidity conditions (at a relative humidity near to 100%) for extended periods, there is a risk of causing coating defects and/or abnormal appearance due to hydrogen-gas generation. Furthermore, it appears impossible to ensure a pot life of even about one week.

Meanwhile, Patent Document 3 exemplifies a technique for suppressing hydrogen-gas generation by incorporating phosphate salts or tri-polyphosphate salts. However, even in this case, the hydrogen-gas generation suppression ability would be insufficient, resulting in hydrogen-gas generation within a pot life of, for example, about one week, resulting in a problem of reduced quality.

On the other hand, while chromate-based compounds have been used in anti-corrosive paints for zinc-plated steel sheets that do not use zinc-rich paints, research is also being conducted into replacing them with non-chromium-based compounds (Non-Patent Documents 2-3). Non-Patent Document 2 shows in Table 2-1, that hexavalent chromate-based compounds are significantly superior in terms of corrosion protection performance as compared to vanadium phosphate and molybdate phosphate. Non-Patent Document 2 mentions that good performance has been achieved by using vanadium pentoxide and calcium phosphate and/or calcium silicate, as anticorrosion pigments. Furthermore, Non-Patent Document 3 mentions that corrosion resistance has been confirmed in vanadium-based coatings.

However, the underlying compositions of water-based zinc-rich paints are fundamentally different from those of non-water-based non-zinc-rich paints; and thus it would be difficult to simply apply such anti-corrosive pigments to water-based zinc-rich paints.

For example, when strontium chromate is adopted in an aqueous zinc-rich paint, hydrogen gas generation will be suppressed, but the crucial sacrificial-corrosion-protection effect is inhibited, resulting in a severe reduction in corrosion protection. In other words, it would be generally difficult to achieve both of: zinc's rust inhibition; and hydrogen-gas generation suppression.

### Prior Art Literature

### Patent Documents

Patent Document 1: JP5750318B
Patent Document 2: JP2020-026457A
Patent Document 3: JP2021-134228A
Patent Document 4: JP2013-221081A

### Non-Patent Documents

Non-Patent Document 1: "Lecture on Durability and Corrosion Prevention (Lecture 5): Fundamentals and Recent Topics of Zinc-Rich Paints," J. Jpn. Soc. Colour Mater., 88(2)(2015)(https://www.jstage.jst.go.jp/article/shikizai/88/2/88_51/_pdf)
Non-Patent Document 2: "Development of New Antirust Pigment for Painted Plated Steel Sheet and Elucidation of Corrosion Inhibition Mechanism of Painted Sacrificial Protection System" Hideki Matsuda, Doctoral Dissertation, Hiroshima University (https://ir.lib.hiroshima-u.ac.jp/00044628)
Non-Patent Document 3: "Study on Conversion Coatings on Zinc Plates Using Chromium Substitute Metals," Tetsuto Kajiyama, Research Report of the Tokyo Metropolitan Industrial Technology Research Institute, No. 4, 2009 p. 72-73 (https://www.iri-tokyo.jp/uploaded/attachment/836.pdf)
Non-Patent Document 4: "Aqueous Roval | ROVAL CORPORATION" (https://www.roval.co.jp/products/aqua/howto.html)

### Summary of the Invention

### Problem to be Solved by the Invention

It is desired a water-based zinc-rich paint that suppresses hydrogen gas generation while achieving low toxicity and high corrosion resistance. In particular, it is desired a paint that is low in manufacturing cost and easy to be handled.

On the other hand, as described in Non-Patent Document 4 for example, water-based zinc-rich paints are applied after mixing and stirring "zinc powder" and "paint liquid." A longer usable time (pot life) after mixing is preferable for work procedures. Pot life decreases with the generation of hydrogen gas due to the reaction between water and zinc while, as per customer needs, a pot life of about one week is desired.

As a result of extensive research into the potential of zinc-rich paints containing zinc powder, which is our company's business, we have discovered that by adding a specific inorganic additive to water-based zinc-rich paints, it is able to sufficiently suppress hydrogen gas generation while maintaining high corrosion resistance.

### Means to Solve the Problem

In a preferred embodiment, the water-based zinc-rich paint may contain zinc powder in an amount of at least 70 wt % (% by weight), preferably 80 wt %or more, more preferably 90 wt % or more, even more preferably 93 wt % or more, even more preferably 94 wt % or more, and even more preferably 95 wt % or more, based on the dried coating film (solid content of the paint), and may contain up to 98 wt % or up to 97 wt % by weight; and, for example, the zinc-rich paint contains zinc powder in an amount of 80 wt %to 98 wt % or 90 wt % to 97 wt %.

Furthermore, the amount of vanadium compound in the dried coating film (solid content of the paint) is at least 0.02 wt % or more, preferably 0.05 wt % or more, more preferably 0.1 wt % or more, and even more preferably 0.2 wt % or more. There is no particular upper limit, but from a cost perspective, it is preferably 5 wt % or less.

Furthermore, the binder resin content of a part of the dried coating film (solids content of the paint), excluding the zinc powder and vanadium compound, is at least 20 wt %, preferably 30 wt % or more, more preferably 40 wt % or more, even more preferably 50 wt % or more, even more preferably 60 wt % or more, and even more preferably 70 wt % or more or 80 wt % or more; for example, 70 wt % to 99 wt % or 70 wt % to 100 wt %. The binder resin content refers to the content of the resin polymer itself.

The vanadium compound is at least one of vanadic acid or vanadate. While there are many chemical species of vanadium compounds, few are known to effectively suppress hydrogen-gas generation, and many also have adverse effects such as reducing the activity of zinc or reducing the storage stability of the paint. Preferred examples include strontium vanadate as a vanadate and vanadium pentoxide as a vanadic acid. However, vanadium pentoxide is difficult to handle due to many legal restrictions, so strontium vanadate is more preferred.

The vanadium compound preferably has an average primary particle size (D₅₀) of 1 µm to 20 µm or 1 µm to 10 µm, particularly 2 µm to 8 µm.

When the vanadium compound is strontium vanadate, the content of strontium vanadate in the dried coating film (solids content of the paint) is at least 0.05 wt %, more preferably 0.1 wt % or more, and particularly 0.2 wt % or more. There is no upper limit, but from a cost perspective, 5 wt % or less is preferable.

On the other hand, when the vanadium compound is vanadium pentoxide, the vanadium pentoxide content in the dried coating film (solids content of the paint) is at least 0.02 wt % or more, preferably 0.05 wt % or more, more preferably 0.1 wt % or more, and even more preferably 0.2 wt % or more, and is preferably 0.5 wt % or less.

In one embodiment, the binder resin is contained in the paint in the form of a resin liquid dispersed or dissolved in water or a solvent containing a certain organic solvent, along with zinc powder and the like. Examples of preferred binder resins include, without particular limitation, organic and inorganic resins while the preferred binder resins may be general coating-film-forming resins, such as acrylic resins, epoxy resins, urethane resins, and epoxy ester resins, or a combination of two or more thereof. Curing manner of the binder resin may either a one-component or two-component one whereas the one-component one is preferred from a viewpoint of ease of application procedure.

In some occasions, the water-based zinc-rich paint may be inorganic-based one or organic-inorganic hybrid-based one, which contains alkyl silicates, alkali silicates or the like, as a binder.

The zinc powder may have an average primary particle size (D₅₀) of preferably 1 to 20 µm, more preferably 1 to 10 µm, and particularly preferably 2 to 8 µm. The metallic zinc content in the zinc powder may be at least 90 wt %, for example, 94 wt % or more, or 95 wt % or more.

In a preferred embodiment, the water-based zinc-rich paint may optionally contain additives for improving corrosion resistance in the dried coating film (solids of the paint). Additives for improving corrosion resistance may be selected from molybdates, tungstates, nitrites, phosphates (phosphoric acid, calcium phosphate, magnesium phosphate, condensed phosphates), tannic acid, thiourea, benzotriazole, and the likes and be added to the paint.

### Effects of the Invention

In addition to achieving corrosion resistance, it is achievable an effect of suppressing hydrogen-gas generation in the paint liquid as well as in the wet coating film after coating procedure. Accordingly, potential of one-component water-based zinc-rich paints comes into sight.

### MODES FOR CARRYING OUT THE INVENTION

In one embodiment, the water-based zinc-rich paint may be easily applied to metal surfaces or wall surfaces by using a commonly-used paint roller or brush; and is able to be completely dried only by simply leaving as still such applied paint at room temperature (typically 15°C to 25°C, e.g., 23°C) within approximately 30 minutes or less, or within one hour, for example.

Such water-based zinc-rich paint may be easily applied after construction work, to indoor or outdoor steel frames, steel plates, steel pillars, handrails, doorknobs, door handles, etc., as well as to walls, fences, pillars, shelves, and storage cases. While steel is preferred for its corrosion-resistant properties, the water-based zinc-rich paint may also be used on other metal materials, such as aluminum, and non-metallic materials.

### EXAMPLES

The hydrogen-gas generation inhibition ability and rust-inhibition properties were confirmed for the present examples and comparative examples.

The paints having been used to confirm the hydrogen-gas generation inhibition ability and rust prevention properties are listed in (1) to (3) below.

### (1) Examples and Comparative Examples 1-7

- Binder resin: One-liquid-type water-based urethane resin (Superflex 150 polyurethane water dispersion, manufactured by Dai-ichi Kogyo Seiyaku Co., Ltd.)
- Hydrogen-gas inhibition additive: Strontium vanadate or vanadium pentoxide.
- Content (weight %; wt %) of the hydrogen-gas inhibition additive (vanadium compound) in the dried coating film (solids content of the coating film): 0.01, 0.02, 0.05, 0.1, 0.2, 0.5, 1, 2, or 5.
- Zinc content in the dried coating film (solids content of the coating film): Zinc powder was added to achieve a 93 wt % content. (The solids content excluding zinc powder and hydrogen gas suppression additive, was 7 wt %.)
- After drying, binder resin was added so as to become 95 wt % of a part of the coating film (solids content of the paint), excluding zinc powder and vanadium compound.
- Water was added so that weight ratio of the above solids content to water became 85:15 and thus the paint was obtained.

### (2) Comparative Examples 8-13

The compositions here were the same as those of the Examples and Comparative Examples 1-7, except for alteration below in respect of the hydrogen-gas suppression additive:
- Comparative Example 8: No additive.
- Comparative Examples 9 and 10: Strontium chromate was added so that its content in the dried coating film (solids content of the paint) became 0.1 wt % and 0.2 wt %, respectively.
- Comparative Examples 11 and 12: Magnesium vanadate was added so that its content in the dried coating film (solids content of the paint) became 0.1 wt % and 0.2 wt %, respectively.
- Comparative Examples 13 and 14: Calcium vanadate was added so that its content in the dried coating film (solids content of the paint) became 0.1 wt % and 0.2 wt %, respectively.
- Comparative Examples 15 and 16: Aluminum vanadate was added so that its content in the dried coating film (solids content of the paint) became 0.1 wt % and 0.2 wt %, respectively.

### (3) Comparative Examples 17 and 18

Paints were prepared based on examples of the prior-art patent documents.
- Comparative Example 17: A paint was prepared based on Example 13 of Patent Document 2.
- Comparative Example 18: A paint was prepared based on Example 7 of Patent Document 3.

### <Procedure for verifying Hydrogen-gas generation inhibition ability>

The hydrogen-gas generation inhibition ability was confirmed using the following procedure.
1. The paint was put into an aluminum pouch, which is able to be hermetically sealed in respect of hydrogen gas, and the pouch was closed as hermetically sealed by heat-sealing. Volume of the aluminum pouch (volume before the test) was measured by using the Archimedes's method.
2. The aluminum pouch was left at 45°C, for 7 days (Table 1) or for 3 months (Table 2), and then the volume of the aluminum pouch (volume after the test) was measured by using the Archimedes method.
3. The volume expansion rate was calculated by using a formula below.$Volume expansion rate = \left(volume after the test/volume before the test-1\right) \times 100 %$

### <Results of verifying the Hydrogen-gas generation inhibition >

The results of verifying the hydrogen-gas generation inhibition are shown in Tables 1 and 2 below.

Here, a volume expansion rate of less than 100% was rated as "O (Good)", and a volume expansion rate of 100% or more was rated as "X (Poor)". The test was conducted on two samples (n = 2)---results of "X (Poor), X (Poor)" were rated as "X (Poor)", results of "O (Good), X (Poor)" were rated as "Δ (Moderate)", and results of "O (Good), O (Good)" were rated "O (Good)".

### <Procedures for verifying Rust-inhibition property>

The rust-inhibition properties of the paints were verified by using procedure below.
1. Prepared paints were stored in a thermostatic chamber set at 45°C for 7 days (Table 1) or for 3 months (Table 2). After stirring, the paints were applied onto steel plates in a manner to achieve a dry film thickness of 80 µm, and allowed to be dried at room temperature for one week.
2. Painted steel plates thus obtained were subjected to Salt spray test (hereinafter referred to as SST), for 480 hours (Table 1: Tests on painted steel plates prepared with the paints having been stored at 45°C for 7 days) or for 800 hours (Table 2: Tests on painted steel plates prepared with the paints having been stored at 45°C for 3 months).

### <Evaluation criteria for Rust-inhibition>

The results of verifying the rust-inhibition are shown in Table 1 below.

Here, samples in which no red rust was observed from the cut area were rated "O (Good)", and samples in which red rust was observed from the cut area were rated "X (Poor)". Each test was conducted on two samples (n = 2)---results of "X, X (Poor, Poor)" were rated as "X (Poor)," results of "O, X (Good, Poor)" were rated as "Δ (Moderate)," and results of "O (Good), O (Good)" were rated as "O (Good)".

**<Table 1>**

| | Sample | | | Hydrogen-gas generation-inhibition ability (45°C, 7 days) | Rust-inhibition (SST480H) | Overall evaluati on |
|---|---|---|---|---|---|---|
| | Additive chemical species | Vanadium-compound concentration [weight %] | Zinc content [weight %] | | Red rust of cut section | |
| Comparative Example 1 | Strontium vanadate | 0.01 | 93 | X | O | X |
| Comparative Example 2 | | 0.02 | | X | O | X |
| Example 1 | | 0.05 | | Δ | O | Δ |
| Example 2 | | 0.1 | | O | O | O |
| Example 3 | | 0.2 | | O | O | O |
| Example 4 | | 0.5 | | O | O | O |
| Example 5 | | 1 | | O | O | O |
| Example 6 | | 2 | | O | O | O |
| Example 7 | | 5 | | O | O | O |
| Example 8 | | 0.2 | 96 | O | O | O |
| Example 9 | | 0.2 | 90 | O | O | O |
| Example 10 | | 0.2 | 80 | O | O | O |
| Example 11 | | 0.2 | 70 | O | Δ | Δ |
| Comparative Example 3 | | 0.2 | 60 | O | X | X |
| Comparative Example 4 | Vanadium pentoxide | 0.01 | 93 | X | O | X |
| Example 12 | | 0.02 | | O | O | O |
| Example 13 | | 0.05 | | O | O | O |
| Example 14 | | 0.1 | | O | O | O |
| Example 15 | | 0.2 | | O | O | O |
| Example 16 | | 0.5 | | O | Δ | Δ |
| Comparative Example 5 | | 1 | | O | X | X |
| Comparative Example 6 | | 2 | | O | X | X |
| Comparative Example 7 | | 5 | | O | X | X |
| Comparative Example 8 | No additive (Blank) | - | | X | O | X |
| Comparative Example 9 | Strontium chromate | 0.1 | | O | X | X |
| Comparative Example 10 | | 0.2 | | O | X | X |
| Comparative Example 11 | Magnesium vanadate | 0.1 | | X | X | X |
| Comparative Example 12 | | 0.2 | | X | X | X |
| Comparative Example 13 | Calcium vanadate | 0.1 | | X | X | X |
| Comparative Example 14 | | 0.2 | | X | X | X |
| Comparative Example 15 | Aluminum vanadate | 0.1 | | X | X | X |
| Comparative Example 16 | | 0.2 | | X | Δ | X |
| Comparative Example 17 | Sulfonic acid ester compounds | - | - | X | O | X |
| Comparative Example 18 | Aluminum dihydrogen tripolyphosphate / Zinc oxide mixture | - | - | X | O | X |

As shown in Table 1, excellent results were achieved in both hydrogen-gas generation inhibition and rust-inhibition by Examples 1 to 7 being added with strontium vanadate in a range of 0.05 to 5 wt %. Meanwhile, by Comparative Examples 1 and 2 being added with smaller amount of strontium vanadate than that of Example 1, it was not necessarily to achieve sufficient hydrogen-gas generation inhibition.

As shown in Table 1, by Examples 3 and 8 to 11 being added with strontium vanadate by 0.2 wt %, excellent results were achieved in both of the hydrogen-gas generation inhibition and the rust inhibition. Meanwhile, sufficient level of the rust-inhibition was not necessarily achieved by Comparative Example 3 having sum of the zinc content and vanadium compound concentration in an amount less than that of Example 11.

Moreover, as shown in Table 1, by Examples 12 to 16 being added with vanadium pentoxide in a range of 0.02 to 0.5 wt %, excellent results were achieved in both of the hydrogen-gas generation inhibition and the rust inhibition. Meanwhile, by Comparative Example 4, in which the amount of vanadium pentoxide added was less than that of Example 12, it was achieved insufficient hydrogen-gas generation inhibition. Furthermore, Comparative Examples 5 to 7, in which the amount of vanadium pentoxide added was greater than that of Example 16, demonstrated insufficient rust prevention.

As shown further in Table 1, by Comparative Example 8 being added with no vanadium compound or other additives, it was achieved an excellent level of the rust-inhibition but, naturally, none of the hydrogen-gas generation inhibition.

Meanwhile, in Comparative Examples 9 and 10, strontium chromate, which has been believed to have excellent level of the rust-inhibition properties, was added instead of vanadium compounds; and, resultantly, the hydrogen-gas generation inhibition ability was sufficient, but the rust-inhibition ability was insufficient.

Moreover, in Comparative Examples 11 to 16, other vanadates (magnesium vanadate, calcium vanadate, aluminum vanadate) were added instead of vanadium compounds; and, resultantly, both of the hydrogen-gas generation inhibition ability and the rust-inhibition ability were insufficient.

In light of the results of Comparative Examples 9-16, excellent results were obtained only when specific vanadium compounds were adopted as among additives having been considered to be common rust-inhibition additives.

Additionally, the differences between specific vanadium compounds (i.e., strontium vanadate and vanadium pentoxide) and other vanadates are thought to be due to differences in their solubility into water and in the oxidizing power of the dissolved components.

**<Table 2>**

| | Sample | | | Hydrogen-gas generation-inhibition ability (45°C, three months) | Rust-inhibition (SST800H) | Overall evaluation |
|---|---|---|---|---|---|---|
| | Additive chemical species | Vanadium compound concentration [weight %] | Zinc content [weight %] | | Red rust of cut section | |
| Example 17 (Example 10) | | 0.2 | 80 | O | X | X |
| Example 18 (Example 9) | | 0.2 | 90 | O | O | O |
| Example 19 (Example 1) | | 0.05 | 93 | X | X | X |
| Example 20 (Example 2) | Strontium vanadate | 0.1 | | O | O | O |
| Example 21 (Example 3) | | 0.2 | | O | O | O |
| Example 22 (Example 4) | | 0.5 | | O | O | O |
| Example 23 | | 0.05 | 94 | X | X | X |
| Example 24 | | 0.1 | | O | O | O |
| Example 25 | | 0.2 | | O | O | O |
| Example 26 | | 0.5 | | O | O | O |
| Example 27 | | 0.05 | 95 | X | X | X |
| Example 28 | | 0.1 | | Δ | O | Δ |
| Example 29 | | 0.2 | | O | O | O |
| Example 30 | | 0.5 | | O | O | O |
| Comparative Example 19 (Comparative Example 8) | No additive (Blank) | - | 93 | X | X | X |

Table 2 summarizes the test results for the hydrogen-gas generation inhibition ability of paints stored at 45°C for three months; as well as the results of an additional experiment, in which painted steel panels prepared by using paints stored at 45°C for the same three months, and then thus painted steel panels were subjected to an 800-hour salt spray test. As shown in Table 2, the paint compositions of Examples 17-22 are respectively identical to those of Examples 10, 9, and 1-4. Moreover, the strontium vanadate concentrations in the solids of the paints of Examples 23-30 are respectively identical to those of Examples 19-22 (having same compositions as Examples 1-4, respectively). It should be noted that the zinc content in the solids is 94 wt % in the paints of Examples 23-26 and is 95 wt % in Examples 27-30.

As shown in Table 2, even after storage at 45°C for three months, excellent results in respect of the hydrogen-gas generation inhibition and the rust inhibition by Examples 18, 20-22, 24-26, and 29-30, in which the zinc content of the paint solids was 90 wt % or higher and the strontium vanadate concentration of the paint solids was 0.1 wt % or higher.

On contrary, in Example 17 (same composition as Example 10), the zinc content of the paint solids was 80 wt % and the strontium vanadate concentration was 0.2 wt %; and thus the hydrogen-gas generation inhibition ability was good, but the rust-inhibition ability was insufficient. Meanwhile, in Examples 19, 23 and 27, the strontium vanadate concentration of the paint solids was 0.05 wt %; and thus the hydrogen-gas generation inhibition ability was insufficient, and therefore the rust-inhibition ability was also insufficient.

As further shown in Table 2, by Comparative Example 19 (same composition as Comparative Example 8) being added with no strontium vanadate, the hydrogen-gas generation inhibition ability was insufficient and the rust-inhibition performance was also insufficient.

As seen by comparing the results in Table 1 with those in Table 2, required concentrations of zinc powder and strontium vanadate in the paint solids may vary depending on the paint's storage period and conditions, as well as the required rust-inhibition performance. Namely, the required minimum concentration of zinc powder may vary in a range between 70 wt % and 90 wt %; and the required minimum concentration of strontium vanadate may vary in a range between 0.05 wt % and 0.2 wt %.

## Claims

1. A water-based zinc-rich paint comprising:
zinc powder in an amount of 70 weight % or more and a vanadium compound in an amount of 0.02 weight % or more, of solids content of the water-based zinc-rich paint; and
a binder resin in an amount of 20 weight % or more, of a part of the solids content excluding the zinc powder and the vanadium compound.

2. The water-based zinc-rich paint according to claim 1, wherein the vanadium compound consists at least one of strontium vanadate and vanadium pentoxide.

3. The water-based zinc-rich paint according to claim 1, wherein the vanadium compound is strontium vanadate.

4. The water-based zinc-rich paint according to claim 1 comprising:
the zinc powder in an amount of 90 weight % or more and the vanadium compound in an amount of 0.1 weight % or more, of the solids content.

5. A painted product coated with the water-based zinc-rich paint according to any one of claims 1 to 4.
